# EUROPEAN PATENT SPECIFICATION

(11) **EP 2 878 912 B1**
(45) Date of publication and mention of the grant of the patent: **24.08.2016**
(21) Application number: 13194817.6
(22) Date of filing: 28.11.2013
(51) Int. Cl.: F28F 9/02, F28F 27/00, F28D 9/00, F25B 39/02, F25B 41/06

(54) **System and method for dynamic control of a heat exchanger**
System und Verfahren zur dynamischen Steuerung eines Wärmetauschers
Système et procédé de commande dynamique d'un échangeur de chaleur

(43) Date of publication of application: 03.06.2015
(73) Proprietor: Alfa Laval Corporate AB, 221 00 Lund (SE)
(72) Inventor: Bertilsson, Klas, SE-241 93 ESLÖV (SE); Nyander, Anders, SE-245 91 STAFFANSTORP (SE); Zorzin, Alvaro, IT-34076 Romans d'Isonzo (GO) (IT)
(74) Representative: Alfa Laval Attorneys

(56) References cited:
- EP-A1- 1 975 525
- EP-A2- 2 314 957
- DE-A1- 10 024 888
- US-A- 2 171 407
- US-A- 3 977 205
- US-B1- 6 415 619

## Description

### Technical field

The present invention refers generally to a system for dynamic control of the operation of a heat exchanger. Further, the invention refers to a method for dynamic control of the operation of a heat exchanger.

### Background art

The present invention refers generally to a system comprising a heat exchanger and in particular to a heat exchanger in the form of a plate heat exchanger. Different types of heat exchangers are based on different techniques. One type of heat exchanger utilizes evaporation of a fluid, such as a cooling agent, for various applications, such as air conditioning, cooling systems, heat pump systems, etc. Thus, the heat exchanger may be used in a two-phase system handling a fluid in a liquid form as well as in an evaporated form.

In case of the evaporator being a plate heat exchanger, this may include a plate package, which comprises a number of first and second heat exchanger plates. The plates are permanently joined to each other and arranged side by side in such a way that a first plate interspace, forming a first fluid passage, is formed between each pair of adjacent first heat exchanger plates and second heat exchanger plates, and a second plate interspace, forming a second fluid passage, between each pair of adjacent second heat exchanger plates and first heat exchanger plates. The first plate interspaces and the second plate interspaces are separated from each other and provided side by side in an alternating order in the plate package. Substantially each heat exchanger plate has at least a first porthole and a second porthole, wherein the first portholes form a first inlet channel to the first plate interspaces and the second portholes form a first outlet channel from the first plate interspaces. The plate package includes a separate space for each of said first plate interspaces, which space is closed to the second plate interspaces.

In this general prior art plate heat exchanger, to be used in a two-phase system, a first fluid, such as a cooling agent, is introduced into a valve in liquid form but expands when going through the valve, due to the pressure drop, into a partly evaporated fluid at one end of the first inlet channel, i.e. the first port hole, for further distribution along the first inlet channel and further into each of the individual first plate interspaces during evaporation into an evaporated form. There is always a risk that the energy content of the supplied fluid is too high, whereby a part of the flow supplied to the inlet channel via its inlet port will meet the rear end of the inlet channel and be reflected thereby in the opposite direction. Thereby the flow in the inlet channel is very chaotic and hard to predict and control.

Further, the pressure drop of the cooling agent may increase with the distance from the inlet to the first inlet channel, whereby the distribution of the first fluid between the individual plate interspaces will be affected.

It is also known that the angular flow change, which the droplets of the first fluid must undergo when entering the individual plate interspaces from the first inlet channel, contributes to an uneven distribution.

Yet another influencing parameter is dimensional differences between the individual first plate interspaces, resulting in that each first plate interspace has its unique efficiency.

It is also known that the operation and performance of an individual first plate interspace depends on its position in a plate package. The outermost first plate interspaces on each side of the plate package tend to behave differently than those in the middle of the plate package.

As a result of this it is very hard, if not impossible, to optimize the operation and efficiency of an heat exchanger as a whole, ensuring that all fluid supplied to the evaporator of the heat exchanger is fully evaporated before leaving the outlet of the evaporator and especially before reaching the inlet of a compressor to be arranged downstream of the outlet of the evaporator, and also ensuring that the heat exchanger functions with high efficiency and capacity during different working conditions. In fact, it is sufficient that there is one malfunctioning first plate interspace for insufficient evaporation of the evaporator as a whole to occur. For example, if a single first plate interspace is flooded, i.e. is incapable of evaporating the complete amount of fluid supplied thereto, droplets will occur downstream the outlet of the evaporator. Generally, by fully evaporated means that the evaporated fluid must have reached superheated state whereby the evaporated fluid comprises dry evaporated fluid only, i.e. the evaporated fluid should have a temperature being higher than the saturation temperature at a prevailing pressure.

The superheating, being a physical parameter well known in the art, is defined as the temperature difference between the present temperature and the saturation temperature at a prevailing pressure, i.e. when there is not any liquid content remaining in the fluid. The superheating is unique for a given fluid and for a given temperature and pressure. The saturation temperature may be found in conventional graphs or tables.

The purpose of operating the evaporator of the heat exchanger as close to a set-point superheating value as possible no matter operation duty is of importance to get as high utilization factor as possible. Thus, it is of economic importance. Further, it has an influence to other components cooperating with the evaporator, such as a compressor, since compressors normally are sensitive to liquid content. Any droplets remaining in the evaporated fluid when reaching the inlet of the compressor may damage the same. Also, there is an economical interest of operating the evaporator with a superheating being as low as possible since once the fluid has reached the superheated state the fluid is completely dry and there is no substantial gain in increasing the temperature additionally.

The set-point superheating above is determined by the system manufacturer to incorporate a certain wanted safety margin against the risk of receiving liquid into the compressor. The problems discussed above get more pronounced when the load of the evaporator is changed. For example, this may be the case when changing the operation duty of an air conditioning system, from one temperature to another, meaning that the amount of fluid to be supplied to the evaporator is changed.

Documents EP2156112B1 and WO2008151629A1 disclose a method for controlling a refrigerant distribution among at least two evaporators in such a manner that the refrigeration capacity of air-heated evaporators is utilized to the greatest possible extent. This is made by monitoring a superheat of refrigerant at a common outlet of the evaporators. Further, this is made by altering a mass flow of refrigerant through a selected evaporator while keeping the total mass flow of refrigerant through all the evaporators substantially constant. The flow is controlled by one single valve being an expansion valve. Thus, the two documents provide a solution to controlling the operation of a plurality of air-heated evaporators, in which method each evaporator is evaluated as a complete unit and in which method each unit is controlled in view of additional evaporators arranged in the same circuit.

Documents EP2314957, US6415619, EP1975525 and US3977205 also disclose heat exchangers with refrigerant distribution control.

Generally, the efficiency of heat exchangers, and especially plate heat exchangers, at part load is a raising issue. More focus is put on how the evaporator of the heat exchanger performs at different operation duties instead of being measured at only one operation duty. For example, laboratory scale trials have shown that an air-conditioning system can save 4-10 % of its energy consumption just by improved evaporator function at part load for a given brazed plate heat exchanger. Further, a heat exchanger system is typically only operating at full capacity for 3 % of the time, while most heat exchangers are designed and tuned for a full capacity operation.

### Summary

The object of the present invention is to provide an improved heat exchanger system remedying the problems mentioned above. Especially it is aimed at a heat exchanger system and a method which allows a better control of the supply of the first fluid, such as the cooling agent, between the fluid passages to thereby improve the efficiency of the plate heat exchanger no matter running condition.

This object is achieved by a system for dynamic control of the operation of a heat exchanger, the system comprising a heat exchanger, a plurality of injector arrangements, a local sensor arrangement, and a controller, wherein the heat exchanger comprises a first global outlet, a first plurality of fluid passages, each fluid passage comprising a local inlet and a local outlet, for the supply of a first fluid to the first global outlet via the first plurality of fluid passages during evaporation of the first fluid, the heat exchanger further comprises a second global outlet, a second plurality of fluid passages, each fluid passage comprising a local inlet and a local outlet, for the supply of a second fluid to the second global outlet via the second plurality of fluid passages, the first fluid passages and the second fluid passages are arranged separated from each other and side-by-side, in order to enable heat exchange between the first fluid in the first plurality of fluid passages and the second fluid in the second plurality of fluid passages, each injector arrangement comprises at least one valve, and each injector arrangement is arranged to supply a flow of the first fluid to the local inlet of at least one of the first plurality of fluid passages, the local sensor arrangement comprises a plurality of local temperature sensors being arranged to measure temperature values corresponding to the local temperature of the evaporated first fluid flowing nearby the local outlets of the first plurality of fluid passages, the controller is arranged to determine a difference between the measured temperature values received from the local sensor arrangement and is further arranged to communicate with the valves of the plurality of injector arrangements to adjust the local amount of first fluid supplied by at least one of the injector arrangements in order to even out the determined difference.

The local adjustment is performed in order to even out any temperature differences in view of the first fluid flowing nearby the local outlets. The overall ambition with the local adjustment may thus be seen as the ambition that all first fluid passages should contribute equally to the overall operation of the evaporator. This is achieved by the inventive system in which the operation of each fluid passage or a subset of fluid passages may be monitored, whereby the contribution from each individual fluid passage to the overall performance of the heat exchanger may be adjusted.

For example, in known heat exchangers, the global amount of flow is adjusted if liquid content is detected in the global outlet or downstream from the global outlet. However, the presence of liquid content in the global flow may be caused by a local overflow in a single fluid passage or in a subset of fluid passages. By measuring local temperatures and evening out the differences between the temperatures in the first fluid flowing nearby the local outlets, only the local flow in the specific fluid passage or passages causing the liquid content is adjusted.

By the inventive system and method, the first plurality of fluid passages may be utilized more efficiently as compared to known techniques. Further, by optimizing the flow in the plurality of first fluid passages, a higher pressure may be achieved in the global flow downstream from the global outlet. In some systems, the efficiency of the compressor is increased when fed with a higher pressure. Thus, the efficiency of the whole system may be boosted.

The plurality of local temperature sensors in the local sensor arrangement may be arranged nearby the local outlets of the first plurality of fluid passages.

Alternatively, the plurality of local temperature sensors in the local sensor arrangement may be arranged nearby the local outlets of the second plurality of fluid passages.

By the term nearby is meant around the local outlet, i.e. it could be both upstream and downstream from the local outlet in view of the first fluid. The local temperature sensors should be positioned such that they measure on flows of first fluid after the flows have evaporated and before the flows mix with each other to form a global flow.

The local temperature sensors may be arranged in through holes having an extension from the exterior of a plate package of the heat exchanger to the interior. Alternatively, the local temperature sensors may be arranged only interior or only exterior of the plate package.

The local temperature sensors may be arranged to measure temperatures in connection to one or more fluid passages. Alternatively, the local sensor sensors may be arranged to measure an average temperature value.

It is to be understood that by measuring temperature values corresponding to the local temperature of the evaporated fluid is meant that the measurement does not need to be performed directly on or in direct connection to the first fluid flowing nearby the local outlets.

The controller may be further arranged to determine a compensating local adjustment of the local amount of first fluid supplied by the other than the at least one of the injector arrangements such that the global amount of first fluid in the plurality of first passages remains the same. The controller may be further arranged to communicate the determined compensating local adjustment to said other than the at least one of the injector arrangements.

The compensating local adjustment is determined in order to keep the global amount of first fluid in the plurality of first passages unaffected by the local adjustments. The global amount may instead be controlled based on values measured by a global sensor arrangement.

The controller may be arranged to determine the difference by at least determining the standard deviation for the measured temperature values. By utilizing the standard deviation for determining the local adjustment, quick and harsh local adjustments are damped such that the adjustment procedure becomes more smooth and even.

It is to be understood that the difference may be determined in many ways and based on the exact measured temperature values or a modification, such as a mean value or adjustment, of one or more measured temperature values. Moreover, one or more differences may be determined based on a single batch of measured temperature values.

The first fluid may be a refrigerant. The second fluid may comprise water. The second fluid may be brine or may consist of only water.

The system may be adapted such that different types of first fluids may be supplied through the system. For example, the system may comprise different sections of fluid passages for the supply of different first fluids.

The controller may be a P regulator, a PI regulator or a PID regulator. These regulator types are well known in the field of automatic control engineering. The PID regulator may be used to relatively fast process and react on values, such as measured temperature and/or pressure values, without causing any self-oscillation of the system.

It is appreciated that other types of conventional controllers may be feasible as well.

The system may further comprise a global sensor arrangement being arranged to measure the global temperature and the global pressure, or the presence of any liquid content, of the evaporated first fluid downstream from the first global outlet. Further, the controller may be arranged to communicate with the valves of the plurality of injector arrangements, or with a global valve, to control, based on information received from the global sensor arrangement, the global amount of the first fluid to be supplied to the first plurality of fluid passages in order for the heat exchanger to operate towards a set-point superheating value.

The term "liquid content" is in the context of this application defined as fluid being in a liquid phase or a mixed liquid/gaseous phase. It may for example be in the form of droplets.

The purpose of the global sensor arrangement is to determine the presence of any liquid content in the evaporated first fluid, or to determine the so called superheating of the evaporated first fluid. The measurements are transmitted to the controller which, in turn, determines a global adjustment of the flow of first fluid in the first plurality of fluid passages.

Thus, the local flow in a subset of the first plurality of fluid passages may be controlled by measuring local temperature values by the local sensor arrangement, and the global flow in the first plurality of fluid passages may be controlled by measuring global temperature and/or pressure values by the global sensor arrangement.

The global adjustment may be described as an adjustment in order to operate towards a set-point superheating or towards the non-presence of liquid content, whereas the local adjustment may be described as an adjustment for evening out the temperature differences within the heat exchanger. Both adjustments are performed in order to optimize the performance of the heat exchanger. The adjustments complement each other but may also function alone. For example, a system may comprise the local sensor arrangement and perform the local tuning of the first plurality of fluid passages without utilizing the global sensor arrangement and global adjustment. Furthermore, the global adjustment may be performed by another arrangement than the global sensor arrangement.

The two processes of local adjustment and global adjustment are preferably performed continuously for the system during operation thereof. Thus, the local flow and the global flow are adjusted continuously whereby the heat exchanger is continuously optimized in view of current running conditions and operation duty. The heat exchanger thus becomes more flexible and adapts to different running conditions. The heat exchanger will run in an optimized manner regardless of the running conditions.

The two processes may be performed as parallel loops in the controller.

The global sensor arrangement may comprise a global temperature sensor and a global pressure sensor. Based on a measured global temperature value and a measured global pressure value, the superheating may be determined by the controller. The two global sensors must not have the same position within the system. However, it may be preferred that the global sensor arrangement is arranged at essentially the same position, such that the global sensors measures on the same portion of evaporated first fluid.

Provided the global sensor arrangement is arranged to measure global temperature and global pressure, the set-point superheating value may for example be the superheating for the specific fluid used as first fluid in the system.

Alternatively, the superheating value may be the calculated superheating for the specific fluid used in the system as adjusted with a predetermined safety margin. In case the global sensor arrangement is arranged to instead measure the presence of any liquid content in the evaporator, the set-point superheating value may be handled in a "digital" manner, wherein presence of any liquid content is an indicator of the amount of fluid supplied to the evaluated fluid passage being too high for a complete evaporation, or alternatively, no presence of any liquid content is an indicator of the amount of fluid supplied to the fluid passage being insufficient and may be increased.

Alternatively, in case the global sensor arrangement is arranged to measure the presence of any liquid content in the evaporated fluid, the global sensor arrangement may be at least one global temperature sensor. The global temperature sensor may be used for determining a tendency of decreasing global temperature as seen over a measuring period or be used for determining an unstable global temperature as seen over a measuring period. Both a tendency of decreasing global temperature and an unstable global temperature may be used as input to the controller to establish the presence of any liquid content in the evaporated fluid since the liquid content, i.e. a fluid flow being in liquid phase or in a mixed liquid/gaseous phase will indicate a lower temperature on the global temperature sensor than a fully evaporated, dry gaseous fluid flow. This principle is also applicable to the local temperature sensors, i.e. the local temperature sensors may be utilized to detect the presence of any liquid content in one or a subset of fluid passages in the first plurality of fluid passages. Thus, the local sensor arrangement may in some embodiments function on its own without the global sensor arrangement.

According to another aspect, the invention relates to the use of a system according to any of the above disclosed embodiments of the system.

According to another aspect, the invention relates to a method for dynamic control of the operation of a heat exchanger in a system according to any of the above disclosed embodiments, the method comprising the steps of:
a) supplying, by the plurality of injector arrangements, a first fluid to the local inlets of the first plurality of fluid passages, and supplying a second fluid to the local inlets of the second plurality of fluid passages;
b) measuring, by the local sensor arrangement, temperature values corresponding to the local temperatures of the evaporated fluid flowing nearby the local outlets of the first plurality of fluid passages;
c) transmitting the measured temperature values to the controller;
d) determining, by the controller, a difference between the measured temperature values;
e) determining, by the controller, a local adjustment of the local amount of fluid supplied by at least one of the plurality of injector arrangements based on the determined difference, in order to even out the determined difference,
f) communicating, by the controller, with the valves of the plurality of injector arrangements to adjust the local amount of first fluid supplied by at least one of the plurality of injector arrangements according to the determined local adjustment.

The method may further comprise the step of determining a compensating local adjustment of the local amount of first fluid supplied by the other than the at least one of the injector arrangements in order to keep the global amount of first fluid in the plurality of first passages unaffected by the local adjustments. The method may further comprise the step of communicating, by the controller, with the valves of the plurality of injector arrangements to adjust the local amount of first fluid supplied by said other than the at least one of the plurality of injector arrangements according to the determined compensating local adjustment.

The step of determining the difference may comprise determining the standard deviation for the measured temperature values.

The method may be performed in a system further comprises a global sensor arrangement comprising a global temperature sensor and a global pressure sensor, wherein the method further comprising the steps of:
g) measuring, by the global sensor arrangement, a global temperature value and a global pressure value of the evaporated first fluid downstream from the first global outlet;
h) transmitting the measured global temperature value and measured global pressure value to the controller;
i) determining, by the controller, the superheating value based on the measured global temperature value and the measured global pressure value;
j) determining, by the controller, the difference between the determined superheating value and a set-point superheating value, or the presence of any liquid content in the evaporated first fluid;
k) determining, by the controller, a global adjustment of the amount of first fluid supplied by the plurality of injector arrangements, required to reach the set-point superheating value,
I) communicating, by the controller, with the valves of the plurality of injector arrangements, or with a global valve, to adjust the global amount of first fluid supplied by the plurality of injector arrangements according to the determined global adjustment.

The steps b)-f) and the steps g)-l) may be performed in parallel.

The steps b)-f) and the steps g)-l) may be continuously performed. The steps b)-f) and the steps g)-l) may be performed as parallel loops in the controller.

The disclosed features and advantages disclosed in connection to the system are relevant for this aspect relating to the method as well. In order to avoid undue repetition, reference is made to the above aspect relating to the system.

### Brief description of the drawings

Embodiments of the invention will now be described, for example, with reference to the accompanying schematic drawings, in which
Fig. 1 schematically illustrates a prior art refrigeration circuit being a mechanical vapor compression system.
Fig. 2 schematically illustrates a side view of a typical plate heat exchanger.
Fig. 3 schematically illustrates a front view of the plate heat exchanger of Fig. 2.
Fig. 4 schematically illustrates a cross section along an edge of a prior art plate heat exchanger.
Fig. 5 illustrates a refrigeration circuit relating to the inventive system.
Fig. 6 illustrates injector arrangements for providing a fluid into the first plurality of fluid passages.
Figs. 7-9 illustrate the positioning of the local sensor arrangement in different embodiments of the present invention.
Fig. 10 illustrates a method for controlling the local flow in the heat exchanger according to one embodiment of the present invention.
Fig. 11 illustrates a method for controlling the global flow in a heat exchanger.

### Detailed description

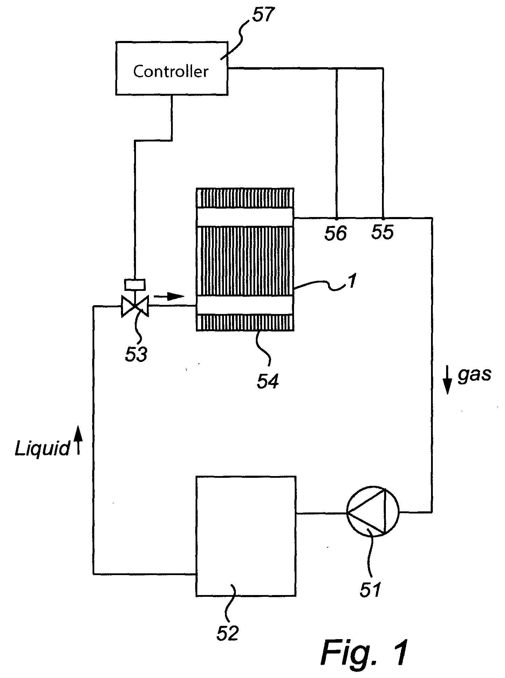

A heat exchanger 1 may typically be included as an evaporator in a refrigeration circuit. A prior art refrigeration system, see Fig. 1, being a mechanical vapor compression system, typically comprises a compressor 51, a condenser 52, an expansion valve 53 and an evaporator 54 . The circuit may further comprise a pressure sensor 55 and a temperature sensor 56 arranged between the outlet of the evaporator and the inlet of the compressor. The refrigeration circle of such system starts when a cooling agent enters the compressor 51 in evaporated form with a low pressure and with a low temperature. The cooling agent is compressed by the compressor 51 to a high pressure and high temperature evaporated state before entering the condenser 52. The condenser 52 precipitates the high pressure and high temperature gas to a high temperature and high pressure liquid by transferring heat to a lower temperature medium, such as water or air. The high temperature liquid then enters the expansion valve 53 where the expansion valve allows the cooling agent to enter the evaporator 54.

The expansion valve 53 has the function of expanding the cooling agent from the high to the low pressure side, and to fine tuning the flow. In order for the higher temperature to cool, the flow into the evaporator must be limited to keep the pressure low and allow evaporation back into the evaporated form. The expansion valve 53 may be operated by a controller 57 based on signals received from the pressure sensor 55 and the temperature sensor 56. The information may be used to indicate the overall operation of the evaporator 54 based on a so called superheating being indicative of any liquid content remaining in the fluid after leaving the evaporator 54.

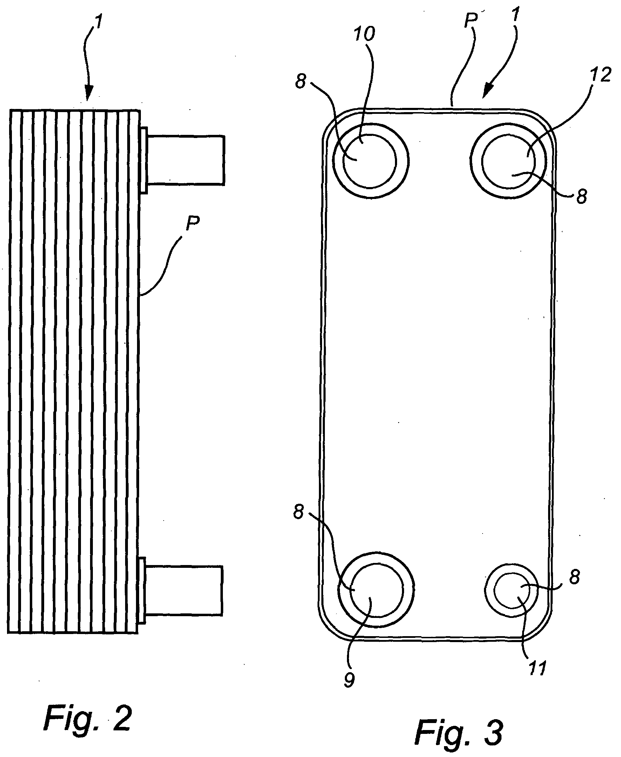

Now turning to Figs. 2 to 4 in which an evaporator in the form of a plate heat exchanger 1 is illustrated. It is to be understood that the heat exchanger 1 may be of any type, such as a plate heat exchanger, a pipe and shell heat exchanger, a spiral heat exchanger etc. The invention will however in the following be discussed as applied to a plate heat exchanger 1, although the invention is not to be limited thereto.

Throughout the application, the terms local and global will be used. The term local, as used in local amount of flow, a local temperature, local inlets and local outlets, refers to a subset of the total system. For example, a local amount of flow in the first plurality of fluid passages refers to an amount of flow in a subset of the first plurality of fluid passages, such as one fluid passage in the first plurality of fluid passages. Another example is that each fluid passage has a local inlet and a local outlet. Yet another example is that local temperature of the first fluid refers to a temperature at a certain position in the first fluid, such as the temperature of the first fluid flowing in one fluid passage in the first plurality of fluid passages.

On the contrary, the term global refers to the total system. For example, the global amount of flow of the first fluid in the first plurality of fluid passages refers to the total amount of flow of the first fluid in the evaporator. Thus, by adjusting the global amount of flow, all injector arrangements are adjusted, by increasing or decreasing the flow, to an equal amount. Another example is that the heat exchanger has a global outlet, meaning the outlet where the local flows from subsets of the first plurality of fluid passages comes together to a single flow. Yet another example is that a global temperature of the first fluid refers to the temperature at a position where the first fluid is flowing as a single flow.

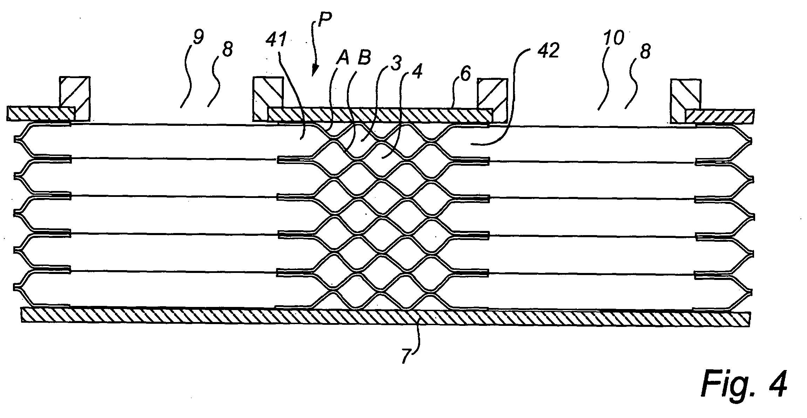

As illustrated in Fig. 4, the plate heat exchanger 1 includes a plate package P, which is formed by a number of heat exchanger plates A, B, which are provided side by side. In the disclosed embodiments, the heat exchanger plates include two different plates, which in the following are referred to as a first heat exchanger plate A and a second heat exchanger plate B.

The heat exchanger plates A, B are provided side by side in such a manner that a first fluid passage 3 is formed between each pair of adjacent first heat exchanger plates A and second heat exchanger plates B, and a second fluid passage 4 is formed between each pair of adjacent second heat exchanger plates B and first heat exchanger plates A. Thus, the heat exchanger comprises a first plurality of fluid passages 3 and a second plurality of fluid passages 4.

Each fluid passage has a local inlet 41 and a local outlet 42. Each local inlet and local outlet may in turn comprise a plurality of entrances to or exits from the space between a pair of adjacent heat exchanger plates forming the fluid passage. Thus, by local inlet to a fluid passage is meant one or more entrances to the fluid passage, and by local outlet from a fluid passage is meant one or more exits from the fluid passages.

The plate package P further includes an upper end plate 6 and a lower end plate 7 provided on a respective side of the plate package P.

As appears from especially Figs. 3 and 4, substantially each heat exchanger plate A, B has four portholes 8.

The first of the portholes 8 forms a first inlet channel 9 to the first plurality of fluid passages, including first fluid passage 3, which extends through substantially the whole plate package P, i.e. all plates A, B and the upper end plate 6. The second of the portholes 8 forms a first outlet channel 10 from the first plurality of fluid passages, which also extends through substantially the whole plate package P, i.e. all plates A, B and the upper end plate 6.

The third of the portholes 8 forms a second inlet channel 11 to the second plurality of fluid passages, including the second fluid passage 4. The fourth of the portholes 8 forms a second outlet channel 12 from the second plurality of fluid passages. Also these two channels 11 and 12 extend through substantially the whole plate package P, i.e. all plates A, B and the upper end plate 6.

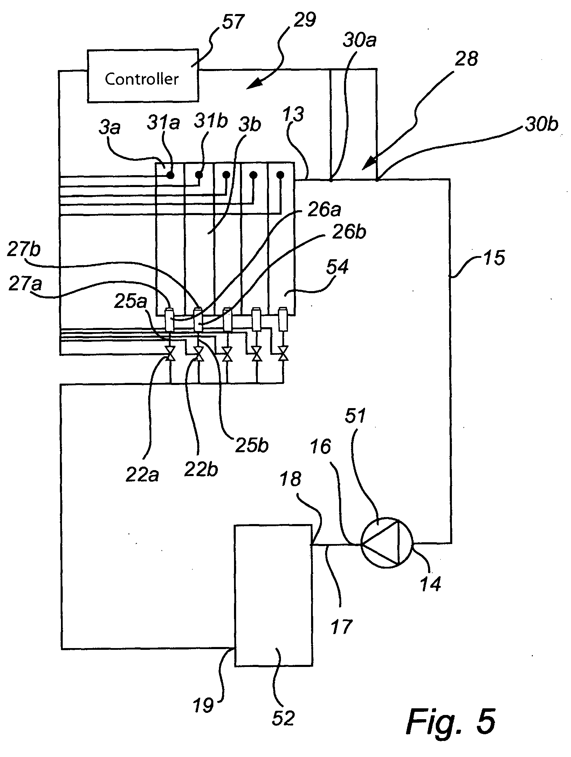

Now turning to Fig. 5, a first embodiment of the inventive system will be discussed. The system comprises an evaporator 54 in the form of a plate heat exchanger. The evaporator 54 comprises heat exchanger plates A, B configured as discloses above in connection to figures 2-4. Thus, the evaporator 54 comprises a first plurality of fluid passages 3 and a second plurality of fluid passages 4.

In Fig. 5, the first plurality of fluid passages are represented by the first fluid passages denoted 3a and 3b. Each first fluid passage 3a, 3b has a local inlet and a local outlet. The evaporator 54 has a global inlet and a global outlet 13. The fluid passages 3a, 3b are arranged such that a first fluid may be supplied through the evaporator 54 from the global inlet to the global outlet 13 via the fluid passages 3a, 3b.

The global outlet 13 of the evaporator 54 is connected to an inlet 14 of a compressor 51 via a tube system 15. An outlet 16 of the compressor 51 is via another tube system 17 connected to an inlet 18 of a condenser 52. An outlet 19 of the condenser 52 is connected to a plurality of injector arrangements 25a, 25b. In the disclosed embodiment, each injector arrangement 25a, 25b comprises a valve 22a, 22b and a nozzle 27a, 27b.

It is to be understood that in its easiest form, an injector arrangement may be constituted by a valve providing a fluid distribution. The injector arrangements 25a, 25b are connected to one or more local inlets of a first fluid passage 3a, 3b in the first plurality of fluid passages of the evaporator 54. Thus, a closed circulation system is provided.

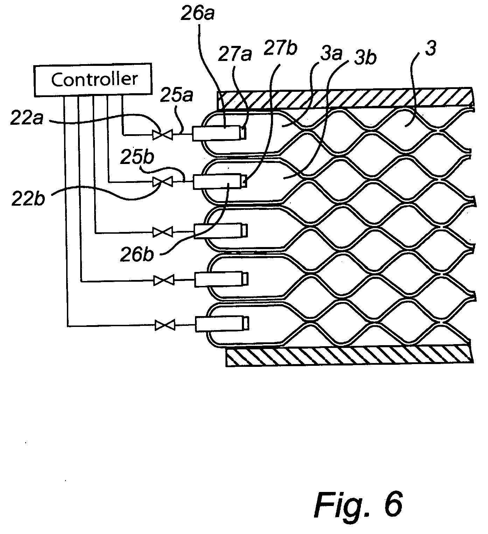

Each injector arrangement 25a, 25b in the plurality of injector arrangements, see Fig. 6, is arranged to supply a flow of a first fluid to a local inlets of a first fluid passage 3a, 3b for evaporation of the first fluid before leaving the evaporator 54 via its global outlet 13. Alternatively, one or more of the injector arrangements may be arranged to supply a flow of a first fluid to the local inlets of more than one of the first fluid passages in the first plurality of fluid passages.

No matter how the injectors arrangements 25a, 25b are arranged, it is preferred that the flow is directed essentially in a direction in parallel with the flow direction through the first plurality of fluid passages 3. Thereby any undue re-direction of the fluid flow may be avoided. In case of the heat exchanger being a plate heat exchanger this means in parallel with the general plane of the first and the second heat exchanger plates.

In the disclosed embodiment, the valves 22a, 22b of the injector arrangements 25a, 25b are positioned exterior of the evaporator 54 and of the plate package P making up the same, whereas the nozzles 27a, 27b of the injector arrangements 25a, 25b are arranged to extend to the interior of the evaporator 54 via evaporator inlets 26a, 26b, in a wall portion of the plate package.

The evaporator inlets 26a, 26b are in the form of through holes having an extension from the exterior of the plate package P to the interior of the plate package and more precisely to the local inlets of the first plurality of fluid passages. The through holes may be formed by plastic reshaping, by cutting or by drilling. The term plastic reshaping refers to a non-cutting plastic reshaping method such as thermal drilling. The cutting or drilling may be made by a cutting tool. It may also be made by laser or plasma cutting.

As an alternative embodiment, as mentioned above, each injector arrangement 25a, 25b may comprise only a valve which both controls the flow and functions as a nozzle. Thus, in its most simple form the nozzles 27a, 27b may be omitted whereby the flow of fluid may be provided from a through hole (not disclosed) or a pipe (not disclosed).

A cross-section of the inlet area of an evaporator possible to be used in the inventive system is disclosed in Fig. 6. The inlet channel 9 of the embodiment of Fig. 4 has been replaced by each first fluid passage, in the first plurality of fluid passages 3, receiving an injector arrangement 25a, 25b.

It is to be understood that each injector arrangement 25a, 25b may comprise a plurality of nozzles, wherein the plurality of nozzles are provided with fluid from a single valve. It is also to be understood that each injector arrangement 25a, 25b may comprise a plurality of valves.

It is to be understood that the number of injectors arrangements 25a, 25b may be lower than the number of first fluid passages 3. Thereby each injector arrangement may be arranged to supply its flow of the first fluid to more than one of the local inlets of the first fluid passages 3. This may be made possible by each injector arrangement 25a, 25b being arranged in a through hole having a diameter extending across two or more first fluid passages, whereby one and the same injector arrangement 25a, 25b may supply fluid to more than one fluid passage in the first plurality of fluid passages 3.

Returning to Fig. 5, the inventive system further comprises a local sensor arrangement 29 comprising local temperature sensors. In this figure, the local temperature sensors are represented by the local temperature sensors denoted 31 a and 31 b.

The local temperature sensors 31 a, 31 b are arranged to measure temperature values corresponding to the local temperature of the evaporated first fluid flowing nearby the local outlets of the first plurality of fluid passages 3. By the term nearby is meant around the local outlet, i.e. it could be either upstream or downstream from the local outlet in view of the first fluid. The local temperature sensors 31 a, 31 b should be positioned such that they measure on flows of first fluid after the flows have evaporated and before the flows mix with each other to form a global flow.

The local temperature sensors 31 a, 31 b may be arranged in through holes having an extension from the exterior of the plate package P to the interior of the plate. Alternatively, the local temperature sensors 31 a, 31 b may be arranged only interior or only exterior of the plate. The local temperature sensors 31 a, 31 b may be arranged separated from each other or in connection to each other by for example attachment to a flute shaped device extending along an outlet channel common for the local outlets of the first plurality of fluid passages 3.

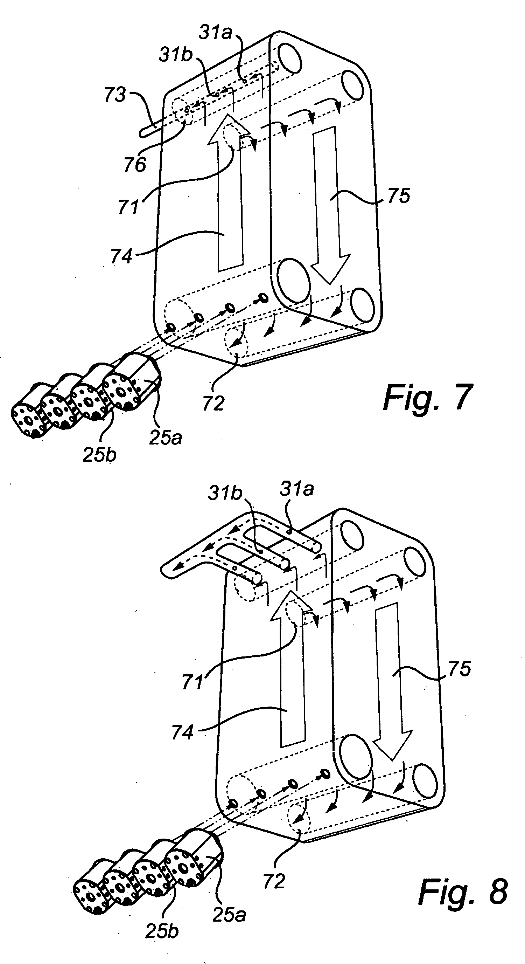

It is to be understood that by measuring temperature values corresponding to the local temperature of the evaporated fluid is meant that the measurement does not need to be performed directly on or in direct connection to the first fluid flowing nearby the local outlets. Different embodiments of how the temperature may be measured will be disclosed in connection to Figs. 7-9 to be discussed below.

The local temperature sensors 31 a, 31 b may be arranged to measure temperatures in connection to one or more fluid passages 3a, 3b. Alternatively, the local sensor sensors 31 a, 31 b may be arranged to measure an average temperature value.

The local sensor arrangement 29 does not need to be arranged to measure the temperature corresponding to the local temperature of the first fluid in all in the first plurality of fluid passages 3. For example, the local temperature sensors 31 a, 31 b may be arranged such that the temperatures corresponding to the local temperatures of the first fluid flowing nearby the local outlets of every tenth pair of fluid passages in the first plurality of fluid passages 3 are measured.

The local temperature sensors 31 a, 31 b are connected to a controller 57. The controller 57 is arranged to communicate with the local sensor arrangement 29 and with the individual valves 22a, 22b of the injector arrangements 25a, 25b. The controller 57 may be for example a P regulator, a PI regulator or a PID regulator.

By the local sensor arrangement 29, the temperatures at local positions within the heat exchanger may be determined. The purpose of the local sensor arrangement 29 is to determine the local temperatures in or nearby the local outlets of one or several first fluid passages 3a, 3b in order to enabling determining and executing a local adjustment of the flow of first fluid in the first plurality of fluid passages 3.

The controller 57 is arranged to receive the measured local temperature values from the local sensor arrangement 29. The controller 57 determines a difference between the measured temperature values. One or more differences may be determined based on a single batch of measured temperature values.

Based on the determined difference, the controller 57 determines a local adjustment of the local amount of first fluid supplied by at least one of the injector arrangements 25a, 25b. The controller 57 may determine one or more local adjustments based on a single batch of measured temperature values received from the local sensor arrangement 29. Different injector arrangements 25a, 25b may be adjusted to a different degree.

The difference may be determined by determining the standard deviation of the measured temperature values received from the local sensor arrangement 29. By utilizing the standard deviation for determining the local adjustment, quick and harsh local adjustments are damped such that the adjustment procedure becomes more smooth and even.

It is to be understood that the controller 57 does not need to base the adjustment on all of the received measured temperature values. For example, the controller 57 may determine an adjustment in flow in view of a particular injector arrangement based on a selected number of measured temperature values, such as those corresponding to the adjacent injector arrangements, or of a mean value of a number of measured temperature values.

The local adjustment is performed in order to even out any temperature differences in view of the first fluid flowing nearby the local outlets. The overall ambition with the local adjustment may thus be seen as the ambition that all first fluid passages 3 should contribute equally to the overall operation of the evaporator.

For example, in known heat exchangers, the global amount of flow is adjusted if liquid content is detected in the global outlet or downstream from the global outlet 13. However, the presence of liquid content in the global flow may be caused by a local overflow in a single fluid passage or in a subset of fluid passages. By measuring local temperatures and evening out the differences between the temperatures in the first fluid flowing nearby the local outlets, only the local flow in the specific fluid passage or passages causing the liquid content is adjusted.

The presence of any liquid content in a local flow may be detected by means of the local sensor arrangement 29 if the local sensors 31 a, 31 b are arranged to measure directly on the first fluid nearby the local outlets of the first plurality of fluid passages 3. If any liquid content is present nearby a local temperature sensor 31a, 31b, the liquid substance will attach to the sensor and evaporate there from. Due to the evaporation, the affected local temperature sensor 31 a, 31 b will measure a temperature value being lower than temperature values from local temperature sensors which measure on a fully evaporated first fluid.

By the inventive system and method, the amount of first fluid in the first fluid passage or passages in which the measured local temperature values are low is adjusted such that all fluid supplied thereto may become evaporated and thus the measured temperature values should increase towards the measured local temperature value of other first fluid passages.

Thus, by the inventive system and method, the first plurality of fluid passages 3 may be utilized more efficiently as compared to known techniques. Further, by optimizing the flow in the plurality of first fluid passages 3, a higher pressure may be achieved in the global flow downstream from the global outlet. In systems such as the one illustrated in Fig. 5, the efficiency of the compressor 51 is increased when fed with a higher pressure. Thus, the efficiency of the whole system may be boosted.

The system further comprises a global sensor arrangement 28. In the disclosed embodiment, the global sensor arrangement 28 comprises a global pressure sensor 30a and a global temperature sensor 30b. The global sensor arrangement 28 may be arranged in the tube system 15 connecting the global outlet 13 of the evaporator 54 with the inlet 14 of the compressor 51 and more precisely in or downstream from the global outlet 13 of the evaporator but before the inlet 14 of the compressor 51.

The two global sensors 30a, 30b must not have the same position within the system. However, it is preferred that the global sensor arrangement 28 is arranged at essentially the same position, such that the global sensors 30a, 30b measures on the same portion of evaporated first fluid.

It may also be possible to arrange the global sensor arrangement 28 or a part thereof in the outlet channel (not disclosed) of the evaporator 54.

The global pressure sensor 30a is preferably arranged after the global outlet 13 of the evaporator 54 in a more or less straight section of the tube system 15 connecting the evaporator 54 with the compressor 51. Depending on the configuration of the tube system 15 it may, as a rule of thumb, be preferred, that the global pressure sensor 30a is arranged on a distance after a tube bend corresponding to at least ten times the inner diameter of the tube, and on a distance before a tube bend corresponding to more than five times the inner diameter of the tube. In some embodiments it is preferred that the global sensor arrangement 28 is arranged nearby the inlet 14 of the compressor 51.

The global pressure sensor 30a is arranged to measure the global pressure value of the evaporated first fluid, in the following identified as the measured global pressure.

The global pressure sensor 30a may for example be a 4-20 mA pressure sensor with a range from 0 to 25 bars.

The global temperature sensor 30b is preferably arranged in the tube system 15 after a tube bend. It is preferred that the temperature sensor 30b is arranged closer to the inlet 14 of the compressor 51 than to the global outlet 13 of the evaporator 54. By positioning the temperature sensor 30b after a tube bend it is more likely that any remaining liquid content in the evaporated first fluid is evaporated while meeting the walls of the tube bend and thereby being forced to change its flow direction. There is also an evaporation taking place by the remaining liquid contents absorbing heat from the surrounding superheated fluid flow.

The global temperature sensor 30b may be a standard temperature sensor measuring the temperature, in the flowing identified as the measured temperature.

The measured values regarding global pressure and global temperature are communicated to the controller 57 which is arranged to regulate the system on a global level based on the determined superheating. Alternatively, or in addition, the controller 57 may base the regulation on a detection of presence of liquid content which may be performed by at least one temperature sensor included in the global sensor arrangement 28.

The superheating, being a physical parameter well known in the art, is defined as the temperature difference between the present temperature and the saturation temperature at a prevailing pressure, i.e. when there is not any liquid content remaining in the fluid. The superheating is unique for a given fluid and for a given temperature and pressure. The superheating may be found in conventional graphs or tables.

Generally, the closer the measured temperature comes to the saturation temperature, the more efficient the system becomes. That is, the amount of fluid supplied to the heat exchanger is completely evaporated and not unnecessary overheated.

However, the closer the measured temperature comes to the saturation temperature, the closer it comes to flooding the system with non-evaporated fluid, i.e. the evaporator is incapable of evaporating the supplied amount of fluid. Solely for illustrative purpose, the superheating may be regarded as being digital - either there is a complete evaporation without any liquid content, or there is an incomplete evaporation with liquid content contained in the evaporated flow downstream the evaporator.

In order to optimize the operation of an evaporator it is desired to have as low superheating as possible. However, since a compressor is sensitive to liquid content and may be damaged thereby, its common praxis to use a safety margin of some degrees when designing an evaporation system. Typically, a normal safety margin for a prior art evaporator is 5° K, i.e. the superheating should be at least 5° K. However, it is to be understood that another value of the safety margin may be elected.

In its most simple form, the safety margin is to be regarded as a constant decided by the intended use of the evaporator. It is however to be understood that there is also a desire to use as low safety margin as possible since there is an economical interest of operating the evaporator as close to the saturation temperature as possible. During the operation of the system this constant will be used as a set-point superheating, i.e. a target value, towards which the operation of the evaporator 54 will be dynamically controlled.

The global amount of first fluid in the first plurality of fluid passages 3 are thus adjusted in order to reach the set-point superheating, or in order to remove the presence of any liquid content. The global tuning works as an optional complement to the local tuning of the local flows within the heat exchanger which is controlled based on values measured by the local sensor arrangement 28.

The purpose of the global sensor arrangement 28 is thus to determine the presence of any liquid content in the evaporated first fluid, or to determine the so called superheating of the evaporated first fluid. The measurements are transmitted to the controller 57 which, in turn, determines a global adjustment of the flow of first fluid in the first plurality of fluid passages 3.

Thus, in one embodiment, the local flow in a subset of the first plurality of fluid passages 3 is controlled by measuring local temperature values by the local sensor arrangement 29, and the global flow in the first plurality of fluid passages 3 is controlled by measuring global temperature and/or pressure values by the global sensor arrangement 28.

The global adjustment may be described as an adjustment in order to operate towards a set-point superheating or towards the non-presence of liquid content, whereas the local adjustment may be described as an adjustment for evening out the temperature differences within the heat exchanger. Both adjustments are performed in order to optimize the performance of the heat exchanger. The adjustments complement each other but may also function on their own. For example, a system may comprise the local sensor arrangement 29 and perform the local tuning of the first plurality of fluid passages 3 without utilizing the global sensor arrangement and global adjustment.

The local adjustment and optionally the global adjustment are preferably performed continuously for the system during operation thereof. Thus, the local flow and optionally also the global flow are adjusted continuously whereby the heat exchanger is continuously optimized in view of current running conditions and operation duty. The heat exchanger thus becomes more flexible and adapts to different running conditions. The heat exchanger will run in an optimized manner regardless of the running conditions.

The two processes may be performed as parallel loops in the controller 57.

The positioning of the local sensor arrangement will now be disclosed with reference to Figs. 7-9. In these figures, both the first plurality of fluid passages and the second plurality of fluid passages are illustrated highly schematically.

As mentioned earlier, the local sensor arrangement is arranged to measure temperature values corresponding to the local temperatures of the evaporated first fluid flowing nearby the local outlets of the first plurality of fluid passages. Thus, the sensors 31 a, 31 b of the local sensor arrangement 29 may measure directly or indirectly on the evaporated first fluid flowing nearby the local outlets.

Referring generally to the Figs. 7-9, a first fluid is supplied to a first plurality of fluid passages by injector arrangements 25a, 25b. The flow of first fluid through the first plurality of fluid passages is indicated by 74. A second fluid is supplied to a second plurality of fluid passages. The flow of second fluid through the second plurality of fluid passages is indicated by 75. The second fluid enters the heat exchanger via a global inlet 71 and exits the heat exchanger via a global outlet 72. When flowing through the respective fluid passages, heat is transferred between the first fluid and the second fluid.

Different embodiment of how the local sensors 31 a, 31 b may be arranged will now be disclosed.

As a first example, the local temperature sensors 31 a, 31 b are in Fig. 7 arranged nearby the local outlets of the first plurality of fluid passages, and the local temperature sensors 31 a, 31 b are arranged within the housing of the heat exchanger. In this embodiment, the local outlets of the first plurality of fluid passages exits in a common outlet channel ending in a global outlet 76 from the heat exchanger. The global outlet 76 corresponds to the first outlet channel 10 of Fig. 3. The local temperature sensors 31 a, 31 b is in this embodiment attachment to a flute shaped device 73 extending along common outlet channel.

As a second example, the local temperature sensors 31 a, 31 b are in Fig. 8 arranged also nearby the local outlets of the first plurality of fluid passages, but instead in a position exterior of the plate package P and outside the housing of the heat exchanger. The local temperature sensors 31 a, 31 b are arranged in so called ports 80a, 80b located between the housing and a common outlet.

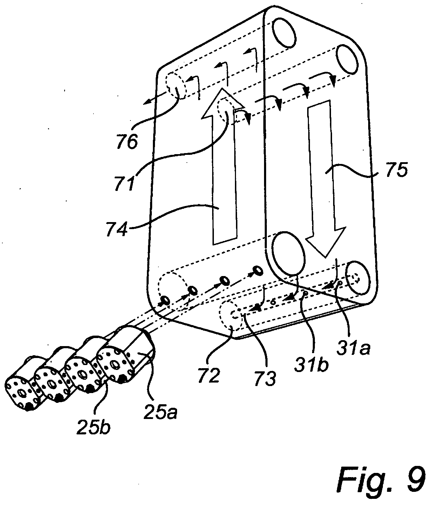

As a third example, the local temperature sensors 31 a, 31 b are in Fig. 9 arranged nearby the local outlets of the second plurality of fluid passages. Thus, the local sensors are in this embodiment not arranged in direct or even indirect connection to the first fluid. However, it has been realized by the inventors that there exists a relation between the local temperature of the second fluid flowing nearby the local outlets of the second plurality of fluid passages and the local temperature of the first fluid flossing nearby the local outlets of the first plurality of fluid passages. More precisely, the local temperature of the second plurality of fluid passages reflects the local temperature of the first fluid. The measured temperature values at the second plurality of fluid passages may therefore in this embodiment be utilized in the controller for determining local adjustments in order to even out differences between the measured temperature values.

By measuring on the second fluid, the measurement procedure may be simplified. Firstly, the second plurality of fluid passage may provide a friendlier environment for the sensors in case the second fluid is water. Secondly, it may be easier to arrange temperature sensors in the second plurality of fluid passages without affecting the fluid. Thirdly, the measured temperature values on the second fluid may be utilized for further purposes, such as providing information regarding the outgoing second fluid temperature to a user.

The measurement on the second fluid may be performed inside the heat exchanger or outside of the heat exchanger in analogy with the arrangement of the local sensors 31a, 31 b when arranged to measure on the first fluid (i.e. Figs. 7 and 8).

It is to be understood that the local sensor arrangement may be arranged to measure directly on the fluid or indirectly, such as by measuring on heat-conducting pipes in which the fluid flows.

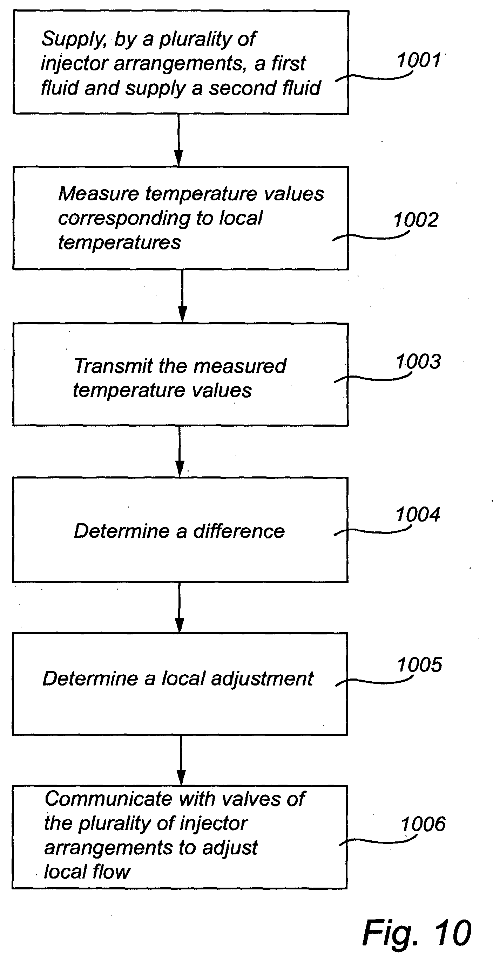

A method according to one embodiment of the present invention for performing the local adjustment of the heat exchanger, based on the measurement of the local sensor arrangement, will now be disclosed with reference to Fig. 10. The heat exchanger system as such has the same general design as that previously described with reference to Fig. 5 whereby reference is made thereto.

As a first step, a first fluid and a second fluid is supplied 1001. The first fluid is supplied by the plurality of injector arrangements to the first plurality of fluid passages 3. The second fluid is supplied to the second plurality of fluid passages 4.

As a following step, temperature values corresponding to local temperatures of the evaporated first fluid flowing nearby the local outlets of the first plurality of fluid passages 3 are measured 1002.

As a following step, the measured temperature values are transmitted 1003 to the controller 57.

As a following step, a difference between the measured temperature values is determined 1004. The difference may for example be determined by determining the standard deviation for the measured temperature values.

As a following step, a local adjustment is determined 1005. The local adjustment is an adjustment of the local amount of fluid supplied by at least one of the plurality of injector arrangements, in order to even out the determined difference. One or more local adjustments may be determined based on the same batch of measured temperature values. For example, a first local adjustment to be applied to a first injector arrangement may be determined together with a second local adjustment to be applied to a second injector arrangement and to a third injector arrangement.

The method may further comprise a step of determining a compensating local adjustment of the local amount of first fluid supplied by the other injector arrangements for which no local adjustment has been determined. As a continuation of the example above, a compensating local adjustment may be determined for a fourth injector arrangement. The compensating local adjustment is determined in order to keep the global amount of first fluid in the plurality of first passages unaffected by the local adjustments. The global amount is instead controlled based on the values measured by the global sensor arrangement.

As a following step, the local adjustment is communicated 1006 from the controller 57 to the valves of the affected injector arrangement. Thus, the local amount of first fluid supplied by that specific injector arrangement is adjusted according to the determined local adjustment.

The compensating local adjustment, if any, is also communicated to the valves of the affected injector arrangements.

The method may be performed continuously in the heat exchanger. The method may further be performed in parallel with global adjustment of the global amount of flow of first fluid.

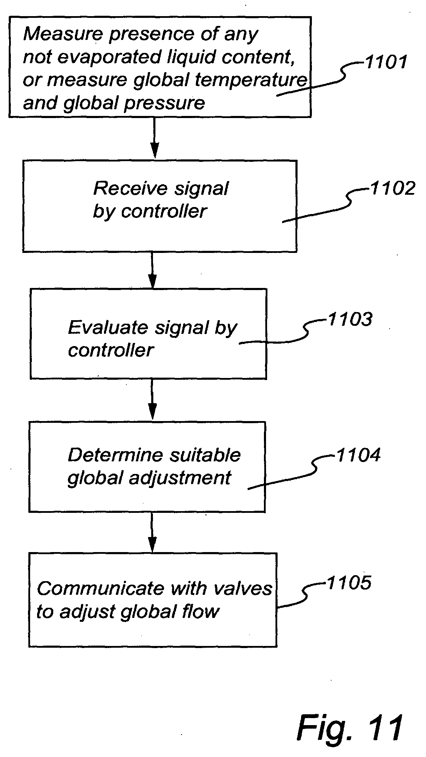

A global adjustment method will in the following be disclosed with reference to Fig. 11. The system as such has the same general design as that previously described with reference to Fig. 5 whereby reference is made thereto.

The global sensor arrangement 28 downstream the global outlet 13 of the heat exchanger measures 1101 the presence of any liquid content in the global flow of first fluid or measured global pressure Pm and global temperature Tm. The signal generated by the global sensor arrangement 28 is received 1102 by the controller 57. The controller may be a P regulator, a PI regulator or a PID regulator.

The controller 57 evaluates 1103 the received signal.

When measuring the presence of any liquid content, the signal may in its most simple form be a digital signal: 1 - no liquid content detected; 0 - liquid content detected. More precisely, a signal having the value 1 indicates that the evaporated fluid has a measured temperature corresponding to or being above the superheating. Likewise, a signal having the value 0 indicates that the evaporated fluid has a temperature being below the superheating.

Alternatively, the superheating may be determined by firstly converting the measured global pressure value to a saturation temperature and secondly establish the superheating by comparing the measured global temperature value with the determined saturation temperature.

As a following step, the controller 57 determines 1104 a suitable global adjustment of first fluid supplied by the plurality of injector arrangement, based on the determined liquid content or determined superheating.

As a following step, the controller 57 communicates with the valves of the injector arrangements, or with a global valve, to adjust the global flow according to the determined global adjustment. The global valve may be a main valve arranged upstream from the injector arrangements, which valve controls the total supply of first fluid to all injector arrangements.

The invention has been described as applied to a heat exchanger being a plate heat exchanger. However, it is to be understood that the invention is applicable no matter form of evaporator or heat exchanger.

The injector arrangements are disclosed as being arranged in through holes extending from the exterior of the plate package into the individual fluid passages. It is to be understood that this is only one possible embodiment. For example, the injector arrangements may extend into any inlet port or the like depending on the design of the evaporator. This may for example be made by a flute device arranged along an inlet channel.

The invention has generally been described based on a plate heat exchanger having first and second plate passages and four port holes allowing a flow of two fluids. It is to be understood that the invention is applicable also for plate heat exchangers having different configurations in terms of the number of plate passages, the number of port holes and the number of fluids to be handled.

It is to be understood that the controller may be used for other purposes as well, such as control of the refrigerant circuit as such.

The invention is not limited to the embodiment disclosed but may be varied and modified within the scope of the following claims, which partly has been described above.

## Claims

1. A system for dynamic control of the operation of a heat exchanger, the system comprising a heat exchanger (1), a plurality of injector arrangements (25a, 25b), a local sensor arrangement (29), and a controller (57), wherein
the heat exchanger (1) comprises a first global outlet (13), a first plurality of fluid passages (3), each fluid passage comprising a local inlet (41) and a local outlet (42), for the supply of a first fluid to the first global outlet (13) via the first plurality of fluid passages (3) during evaporation of the first fluid;
the heat exchanger (1) further comprises a second global outlet, a second plurality of fluid passages (4), each fluid passage comprising a local inlet and a local outlet, for the supply of a second fluid to the second global outlet via the second plurality of fluid passages (4);
the first fluid passages (3) and the second fluid passages (4) are arranged separated from each other and side-by-side, in order to enable heat exchange between the first fluid in the first plurality of fluid passages (3) and the second fluid in the second plurality of fluid passages (4);
each injector arrangement (25a, 25b) comprises at least one valve (22a, 22b), and each injector arrangement (25a, 25b) is arranged to supply a flow of the first fluid to the local inlet (41) of at least one of the first plurality of fluid passages (3);
the local sensor arrangement (29) comprises a plurality of local temperature sensors (31 a, 31 b) being arranged to measure temperature values corresponding to the local temperature of the evaporated first fluid flowing nearby the local outlets of the first plurality of fluid passages (3);
the controller (57) is arranged to determine a difference between the measured temperature values received from the local sensor arrangement (29) and is further arranged to communicate with the valves (22a, 22b) of the plurality of injector arrangements (25a, 25b) to adjust the local amount of first fluid supplied by at least one of the injector arrangements (25a, 25b) in order to even out the determined difference.

2. The system according to claim 1, wherein the plurality of local temperature sensors (31 a, 31 b) in the local sensor arrangement (29) are arranged nearby the local outlets of the first plurality of fluid passages (3).

3. The system according to claim 1, wherein the plurality of local temperature sensors (31 a, 31 b) in the local sensor arrangement are arranged nearby the local outlets of the second plurality of fluid passages (4).

4. The system according to any of claims 1-3, wherein the controller (57) is further arranged to determine a compensating local adjustment of the local amount of first fluid supplied by the other than the at least one of the injector arrangements (25a, 25b) such that the global amount of first fluid in the first plurality of first passages (3) remains the same, and communicate the determined compensating local adjustment to said other than the at least one of the injector arrangements (25a, 25b).

5. The system according to any of claims 1-4, wherein the controller (57) is arranged to determine the difference by at least determining the standard deviation for the measured temperature values.

6. The system according to any of claims 1-5, wherein the first fluid is refrigerant and the second fluid comprises water.

7. The system according to any of claims 1-6, wherein the controller (57) is a PI regulator or a PID regulator.

8. The system according to any of the previous claims, wherein
the system further comprises a global sensor arrangement (28) being arranged to measure the global temperature and the global pressure, or the presence of any liquid content, of the evaporated first fluid downstream from the first global outlet;
the controller is arranged to communicate with the valves of the plurality of injector arrangements (25a, 25b), or with a global valve, to control, based on information received from the global sensor arrangement (28), the global amount of the first fluid to be supplied to the first plurality of fluid passages (3) in order for the heat exchanger (1) to operate towards a set-point superheating value.

9. The system according to claim 8, wherein the global sensor arrangement (28) comprises a global pressure sensor (30a) and a global temperature sensor (30b).

10. Use of a system according to any one of claims 1-9.

11. A method for dynamic control of the operation of a heat exchanger in a system according to any of the claims 1-9, the method comprising the steps of:
a) supplying (1001), by the plurality of injector arrangements, a first fluid to the local inlets of the first plurality of fluid passages, and supplying a second fluid to the local inlets of the second plurality of fluid passages;
b) measuring (1002), by the local sensor arrangement, temperature values corresponding to the local temperatures of the evaporated fluid flowing nearby the local outlets of the first plurality of fluid passages;
c) transmitting (1003) the measured temperature values to the controller;
d) determining (1004), by the controller, a difference between the measured temperature values;
e) determining (1005), by the controller, a local adjustment of the local amount of fluid supplied by at least one of the plurality of injector arrangements based on the determined difference, in order to even out the determined difference,
f) communicating (1006), by the controller, with the valves of the plurality of injector arrangements to adjust the local amount of first fluid supplied by at least one of the plurality of injector arrangements according to the determined local adjustment.

12. The method according to claim 11, further comprising the steps of:
determining a compensating local adjustment of the local amount of first fluid supplied by the other than the at least one of the injector arrangements in order to keep the global amount of first fluid in the plurality of first passages unaffected by the local adjustments; and
communicating, by the controller, with the valves of the plurality of injector arrangements to adjust the local amount of first fluid supplied by said other than the at least one of the plurality of injector arrangements according to the determined compensating local adjustment.

13. The method according to claim 11 or 12, wherein the step of determining the difference comprises determining the standard deviation for the measured temperature values.

14. The method according to any of claims 11-13, wherein the system further comprises a global sensor arrangement comprising a global temperature sensor and a global pressure sensor, the method further comprising the steps of:
g) measuring (1101), by the global sensor arrangement, a global temperature value and a global pressure value of the evaporated first fluid downstream from the first global outlet;
h) transmitting (1102) the measured global temperature value and measured global pressure value to the controller;
i) determining (1103), by the controller, the superheating value based on the measured global temperature value and the measured global pressure value;
j) determining (1103), by the controller, the difference between the determined superheating value and a set-point superheating value, or the presence of any liquid content in the evaporated first fluid;
k) determining (1104), by the controller, a global adjustment of the amount of first fluid supplied by the plurality of injector arrangements, required to reach the set-point superheating value,
l) communicating (1105), by the controller, with the valves of the plurality of injector arrangements, or with a global valve, to adjust the global amount of first fluid supplied by the plurality of injector arrangements according to the determined global adjustment.

15. The method according to claim 14, wherein the steps b)-f) and the steps g)-l) are performed in parallel.

16. The method according to claim 14 or 15, wherein the steps b)-f) and the steps g)-l) are continuously performed as parallel loops in the controller.

## Patentansprüche

1. System zur dynamischen Steuerung des Betriebs eines Wärmetauschers, wobei das System einen Wärmetauscher (1), mehrere Einspritzanordnungen (25a, 25b), eine örtliche Sensoranordnung (29) und ein Steuergerät (57) umfasst, wobei
der Wärmetauscher (1) einen ersten allgemeinen Auslass (13), eine erste Vielzahl von Fluiddurchgängen (3), wobei jeder Fluiddurchgang einen örtlichen Einlass (41) und einen örtlichen Auslass (42) umfasst, für die Zufuhr eines ersten Fluids zu dem ersten allgemeinen Auslass (13) über die erste Vielzahl von Fluiddurchgängen (3) während des Verdampfens des ersten Fluids, umfasst,
der Wärmetauscher (1) ferner einen zweiten allgemeinen Auslass, eine zweite Vielzahl von Fluiddurchgängen (4), wobei jeder Fluiddurchgang einen örtlichen Einlass und einen örtlichen Auslass umfasst, für die Zufuhr eines zweiten Fluids zu dem zweiten allgemeinen Auslass über die zweite Vielzahl von Fluiddurchgängen (4), umfasst,
die ersten Fluiddurchgänge (3) und die zweiten Fluiddurchgänge (4) getrennt voneinander und nebeneinander angeordnet sind, um einen Wärmeaustausch zwischen dem ersten Fluid in der ersten Vielzahl von Fluiddurchgängen (3) und dem zweiten Fluid in der zweiten Vielzahl von Fluiddurchgängen (4) zu ermöglichen,
jede Einspritzanordnung (25a, 25b) wenigstens ein Ventil (22a, 22b) umfasst und jede Einspritzanordnung (25a, 25b) dafür angeordnet ist, dem örtlichen Einlass (41) wenigstens eines von der ersten Vielzahl von Fluiddurchgängen (3) einen Strom des ersten Fluids zuzuführen,
die örtliche Sensoranordnung (29) mehrere örtliche Temperatursensoren (31a, 31b), die dafür angeordnet sind, Temperaturwerte zu messen, die der örtlichen Temperatur des verdampften ersten Fluids entsprechen, das nahe den örtlichen Auslässen der ersten Vielzahl von Fluiddurchgängen (3) strömt,
das Steuergerät (57) dafür angeordnet ist, eine Differenz zwischen den von der örtlichen Sensoranordnung (29) empfangenen gemessenen Temperaturwerten festzustellen, und ferner dafür angeordnet ist, mit den Ventilen (22a, 22b) der mehreren Einspritzanordnungen (25a, 25b) zu kommunizieren, um die örtliche Menge des ersten Fluids, die durch wenigstens eine der Einspritzanordnungen (25a, 25b) zugeführt wird, einzustellen, um die festgestellte Differenz auszugleichen.

2. System nach Anspruch 1, wobei die mehreren örtlichen Temperatursensoren (31a, 31b) in der örtlichen Sensoranordnung (29) nahe den örtlichen Auslässen der ersten Vielzahl von Fluiddurchgängen (3) angeordnet sind.

3. System nach Anspruch 1, wobei die mehreren örtlichen Temperatursensoren (31a, 31b) in der örtlichen Sensoranordnung nahe den örtlichen Auslässen der zweiten Vielzahl von Fluiddurchgängen (4) angeordnet sind.

4. System nach einem der Ansprüche 1 bis 3, wobei das Steuergerät (57) ferner dafür angeordnet ist, eine ausgleichende örtliche Einstellung der örtlichen Menge des ersten Fluids, die durch die andere als die wenigstens eine der Einspritzanordnungen (25a, 25b) zugeführt wird, festzustellen, derart, dass die Gesamtmenge des ersten Fluids in der ersten Vielzahl von Fluiddurchgängen (3) die gleiche bleibt, und die festgestellte ausgleichende örtliche Einstellung an die andere als die wenigstens eine der Einspritzanordnungen (25a, 25b) zu kommunizieren.

5. System nach einem der Ansprüche 1 bis 4, wobei das Steuergerät (57) dafür angeordnet ist, die Differenz durch wenigstens das Feststellen der Standardabweichung für die gemessenen Temperaturwerte festzustellen.

6. System nach einem der Ansprüche 1 bis 5, wobei das erste Fluid Kältemittel ist und das zweite Fluid Wasser umfasst.

7. System nach einem der Ansprüche 1 bis 6, wobei das Steuergerät (57) ein PI-Regler oder ein PID-Regler ist.

8. System nach einem der vorhergehenden Ansprüche, wobei
das System ferner eine allgemeine Sensoranordnung (28) umfasst, die dafür angeordnet ist, die allgemeine Temperatur und den allgemeinen Druck oder das Vorhandensein jeglichen flüssigen Gehalts des verdampften ersten Fluids stromabwärts von dem ersten allgemeinen Auslass zu messen,
das Steuergerät dafür angeordnet ist, mit den Ventilen der mehreren Einspritzanordnungen (25a, 25b) oder mit einem allgemeinen Ventil zu kommunizieren, um, auf der Grundlage der von der allgemeinen Sensoranordnung (28) empfangenen Informationen, die Gesamtmenge des ersten Fluids, die der ersten Vielzahl von Fluiddurchgängen (3) zuzuführen ist, zu steuern, damit der Wärmetauscher (1) zu einem Überhitzungssollwert hin arbeitet.

9. System nach Anspruch 8, wobei die allgemeine Sensoranordnung (28) einen allgemeinen Drucksensor (30a) und einen allgemeinen Temperatursensor (30b) umfasst.

10. Verwendung eines Systems nach einem der Ansprüche 1 bis 9.

11. Verfahren zur dynamischen Steuerung des Betriebs eines Wärmetauschers in einem System nach einem der Ansprüche 1 bis 9, wobei das Verfahren die folgenden Schritte umfasst:
a) das Zuführen (1001), durch die mehreren Einspritzanordnungen, eines ersten Fluids zu den örtlichen Einlässen der ersten Vielzahl von Fluiddurchgängen und das Zuführen eines zweiten Fluids zu den örtlichen Einlässen der zweiten Vielzahl von Fluiddurchgängen,
b) das Messen (1002), durch die örtliche Sensoranordnung, von Temperaturwerten, die der örtlichen Temperatur des verdampften Fluids entsprechen, das nahe den örtlichen Auslässen der ersten Vielzahl von Fluiddurchgängen strömt,
c) das Übermitteln(1003) der gemessenen Temperaturwerte an das Steuergerät,
d) das Feststellen (1004), durch das Steuergerät, einer Differenz zwischen den gemessenen Temperaturwerten,
e) das Feststellen (1005), durch das Steuergerät, einer örtlichen Einstellung der örtlichen Menge des Fluids, die durch wenigstens eine der Vielzahl von Einspritzanordnungen zugeführt wird, auf der Grundlage der festgestellten Differenz, um die festgestellte Differenz auszugleichen,
f) das Kommunizieren (1006), durch das Steuergerät, mit den Ventilen der Vielzahl von Einspritzanordnungen, um die örtliche Menge des ersten Fluids, die durch wenigstens eine der Vielzahl von Einspritzanordnungen zugeführt wird, entsprechend der festgestellten örtlichen Einstellung einzustellen.

12. Verfahren nach Anspruch 11, das ferner die folgenden Schritte umfasst:
das Feststellen einer ausgleichenden örtlichen Einstellung der örtlichen Menge des ersten Fluids, die durch die andere als die wenigstens eine der Einspritzanordnungen zugeführt wird, um die Gesamtmenge des ersten Fluids in der Vielzahl von ersten Durchgängen durch die örtlichen Einstellungen unbeeinflusst zu halten, und
das Kommunizieren, durch das Steuergerät, mit den Ventilen der Vielzahl von Einspritzanordnungen, um die örtliche Menge des ersten Fluids, die durch die andere als die wenigstens eine der Vielzahl von Einspritzanordnungen zugeführt wird, entsprechend der festgestellten ausgleichenden örtlichen Einstellung einzustellen.

13. Verfahren nach Anspruch 11 oder 12, wobei der Schritt des Feststellens der Differenz das Feststellen der Standardabweichung für die gemessenen Temperaturwerte umfasst.

14. Verfahren nach einem der Ansprüche 11 bis 13, wobei das System ferner eine allgemeine Sensoranordnung umfasst, die einen allgemeinen Temperatursensor und einen allgemeinen Drucksensor umfasst, wobei das Verfahren ferner die folgenden Schritte umfasst:
g) das Messen (1101), durch die allgemeine Sensoranordnung, eines allgemeinen Temperaturwertes und eines allgemeinen Druckwertes des verdampften ersten Fluids stromabwärts von dem ersten allgemeinen Auslass,
h) das Übermitteln (1102) des gemessenen allgemeinen Temperaturwertes und des gemessenen allgemeinen Druckwertes an das Steuergerät,
i) das Feststellen (1103), durch das Steuergerät, des Überhitzungswertes auf der Grundlage des gemessenen allgemeinen Temperaturwertes und des gemessenen allgemeinen Druckwertes,
j) das Feststellen (1103), durch das Steuergerät, der Differenz zwischen dem festgestellten Überhitzungswert und einem Überhitzungssollwert oder des Vorhandenseins jeglichen Flüssigkeitsgehalts in dem verdampften ersten Fluid,
k) das Feststellen (1104), durch das Steuergerät, einer allgemeinen Einstellung der durch die Vielzahl von Einspritzanordnungen zugeführten Menge des ersten Fluids, die erforderlich ist, um den Überhitzungssollwert zu erreichen,
l) das Kommunizieren (1105), durch das Steuergerät, mit den Ventilen der Vielzahl von Einspritzanordnungen oder mit einem allgemeinen Ventil, um die Gesamtmenge des ersten Fluids, die durch die Vielzahl von Einspritzanordnungen zugeführt wird, entsprechend der festgestellten allgemeinen Einstellung einzustellen.

15. Verfahren nach Anspruch 14, wobei die Schritte b) bis f) und die Schritte g) bis l) parallel durchgeführt werden.

16. Verfahren nach Anspruch 14 oder 15, wobei die Schritte b) bis f) und die Schritte g) bis l) kontinuierlich als parallele Schleifen in dem Steuergerät durchgeführt werden.

## Revendications

1. Système permettant une commande dynamique du fonctionnement d'un échangeur de chaleur, le système comprenant un échangeur de chaleur (1), une pluralité d'agencements d'injecteur (25a, 25b), un agencement de capteur local (29), et un dispositif de commande (57), dans lequel
l'échangeur de chaleur (1) comprend une première sortie générale (13), une première pluralité de passages de fluide (3), chaque passage de fluide comprenant une entrée locale (31) et une sortie locale (42), afin de fournir un premier fluide vers la première sortie générale (13) via la première pluralité de passages de fluide (3) pendant une évaporation du premier fluide ;
l'échangeur de chaleur (1) comprend en outre une deuxième sortie générale, une deuxième pluralité de passages de fluide (4), chaque passage de fluide comprenant une entrée locale et une sortie locale, afin de fournir un deuxième fluide vers la deuxième sortie générale via la deuxième pluralité de passages de fluide (4) ;
les premiers passages de fluide (3) et les deuxièmes passages de fluide (4) sont agencés séparés l'un de l'autre et côte à côte, afin de permettre un échange de chaleur entre le premier fluide présent dans la première pluralité de passages de fluide (3) et le deuxième fluide présent dans la deuxième pluralité de passages de fluide (4) ;
chaque agencement d'injecteur (25a, 25b) comprend au moins une valve (22a, 22b), et chaque agencement d'injecteur (25a, 25b) est agencé pour fournir un flux du premier fluide vers l'entrée locale (41) d'au moins un parmi la première pluralité de passages de fluide (3) ;
l'agencement de capteur local (29) comprend une pluralité de capteurs de température locale (31a, 31b) agencés pour mesurer des valeurs de température correspondant à la température locale du premier fluide évaporé circulant à proximité des sorties locales de la première pluralité de passages de fluide (3) ;
le dispositif de commande (57) est agencé pour déterminer une différence entre les valeurs de température mesurées reçues à partir de l'agencement de capteur local (29) et est en outre agencé pour communiquer avec les valves (22a, 22b) de la pluralité d'agencements d'injecteur (25a, 25b) afin d'ajuster la quantité locale du premier fluide fourni grâce à au moins un des agencements d'injecteur (25a, 25b) afin d'égaliser la différence déterminée.

2. Système selon la revendication 1, dans lequel la pluralité de capteurs de température locale (31a, 31b) présents dans l'agencement de capteur local (29) sont agencés à proximité des sorties locales de la première pluralité de passages de fluide (3).

3. Système selon la revendication 1, dans lequel la pluralité de capteurs de température locale (31a, 31b) présents dans l'agencement de capteur local sont agencés à proximité des sorties locales de la deuxième pluralité de passages de fluide (4).

4. Système selon l'une quelconque des revendications 1 à 3, dans lequel le dispositif de commande (57) est en outre agencé pour déterminer un ajustement local de compensation de la quantité locale du premier fluide fourni grâce à l'agencement autre que le au moins un des agencements d'injecteur (25a, 25b) de telle manière que la quantité générale du premier fluide présent dans la première pluralité de premiers passages (3) reste la même, et pour communiquer l'ajustement local de compensation déterminé audit agencement autre que le au moins un des agencements d'injecteur (25a, 25b).

5. Système selon l'une quelconque des revendications 1 à 4, dans lequel le dispositif de commande (57) est agencé pour déterminer la différence grâce à au moins une détermination de l'écart standard pour les valeurs de température mesurées.

6. Système selon l'une quelconque des revendications 1 à 5, dans lequel le premier fluide est réfrigérant et le deuxième fluide comprend de l'eau.

7. Système selon l'une quelconque des revendications 1 à 6, dans lequel le dispositif de commande (57) est un régulateur PI ou un régulateur PID.

8. Système selon l'une quelconque des revendications précédentes, dans lequel
le système comprend en outre un agencement de capteur global (28) agencé pour mesurer la température générale et la pression générale, ou la présence d'une quelconque teneur en liquide, du premier fluide évaporé en aval de la première sortie générale ;
le dispositif de commande est agencé pour communiquer avec les valves de la pluralité d'agencements d'injecteur (25a, 25b), ou avec une valve générale, afin de commander, en se basant sur des informations reçues à partir de l'agencement de capteur global (28), la quantité générale du premier fluide à fournir vers la première pluralité de passages de fluide (3) afin que l'échangeur de chaleur (1) fonctionne en se rapprochant d'une valeur de surchauffe de consigne.

9. Système selon la revendication 8, dans lequel l'agencement de capteur global (28) comprend un capteur de pression générale (30a) et un capteur de température générale (30b).

10. Utilisation d'un système selon l'une quelconque des revendications 1 à 9.

11. Procédé permettant une commande dynamique du fonctionnement d'un échangeur de chaleur dans un système selon l'une quelconque des revendications 1 à 9, le procédé comprenant des étapes consistant à :
a) fournir (1001), grâce à la pluralité d'agencements d'injecteur, un premier fluide vers les entrées locales de la première pluralité de passages de fluide, et fournir un deuxième fluide vers les entrées locales de la deuxième pluralité de passages de fluide ;
b) mesurer (1002), grâce à l'agencement de capteur local, des valeurs de température correspondant aux températures locales du fluide évaporé circulant à proximité des sorties locales de la première pluralité de passages de fluide ;
c) transmettre (1003) les valeurs de température mesurées au dispositif de commande ;
d) déterminer (1004), grâce au dispositif de commande, une différence entre les valeurs de température mesurées ;
e) déterminer (1005), grâce au dispositif de commande, un ajustement local de la quantité locale de fluide fournie grâce à au moins un parmi la pluralité d'agencements d'injecteur en se basant sur la différence déterminée, afin d'égaliser la différence déterminée,
f) communiquer (1006), grâce au dispositif de commande, avec les valves de la pluralité d'agencements d'injecteur afin d'ajuster la quantité locale du premier fluide fourni grâce à au moins un parmi la pluralité d'agencements d'injecteur conformément à l'ajustement local déterminé.

12. Procédé selon la revendication 11, comprenant en outre les étapes consistant à :
déterminer un ajustement local de compensation de la quantité locale du premier fluide fourni grâce à l'agencement autre que le au moins un des agencements d'injecteur afin de conserver la quantité générale du premier fluide dans la pluralité de premiers passages sans qu'elle soit affectée par les ajustements locaux ; et
communiquer, grâce au dispositif de commande, avec les valves de la pluralité d'agencements d'injecteur afin d'ajuster la quantité locale du premier fluide fourni grâce à audit agencement autre que le au moins un parmi la pluralité d'agencements d'injecteur conformément à l'ajustement local de compensation déterminé.

13. Procédé selon la revendication 11 ou 12, dans lequel l'étape de détermination de la différence comprend une étape consistant à déterminer l'écart standard pour les valeurs de température mesurées.

14. Procédé selon l'une quelconque des revendications 11 à 13, dans lequel le système comprend en outre un agencement de capteur global comprenant un capteur de température générale et un capteur de pression générale, le procédé comprenant en outre les étapes consistant à :
g) mesurer (1101), grâce à l'agencement de capteur global, une valeur de température générale et une valeur de pression générale du premier fluide évaporé en aval de la première sortie générale ;
h) transmettre (1102) la valeur de température générale mesurée et la valeur de pression générale mesurée au dispositif de commande ;
i) déterminer (1103), grâce au dispositif de commande, la valeur de surchauffe en se basant sur la valeur de température générale mesurée et la valeur de pression générale mesurée ;
j) déterminer (1103), grâce au dispositif de commande, la différence entre la valeur de surchauffe déterminée et une valeur de surchauffe de consigne, ou la présence d'un quelconque teneur en liquide dans le premier fluide évaporé ;
k) déterminer (1104), grâce au dispositif de commande, un ajustement global de la quantité du premier fluide fourni grâce à la pluralité d'agencements d'injecteur, nécessaire pour atteindre la valeur de surchauffe de consigne,
1) communiquer (1105), grâce au dispositif de commande, avec les valves de la pluralité d'agencements d'injecteur, ou avec une valve générale, afin d'ajuster la quantité générale du premier fluide fourni grâce à la pluralité d'agencements d'injecteur conformément à l'ajustement global déterminé.

15. Procédé selon la revendication 14, dans lequel les étapes b) à f) et les étapes g) à 1) sont mises en oeuvre en parallèle.

16. Procédé selon la revendication 14 ou 15, dans lequel les étapes b) à f) et les étapes g) à 1) sont mises en oeuvre en continu sous forme de boucles parallèles dans le dispositif de commande.
